Europäisches Patentamt

European Patent Office

Office européen des brevets

(19)

(11) Numéro de publication: **0 262 065 B1**

## FASCICULE DE BREVET EUROPEEN

(12)

(45) Date de publication de fascicule du brevet:
02.05.91

(51) Int. Cl.⁵: **H04M 11/02**

(21) Numéro de dépôt: **87440043.5**

(22) Date de dépôt: **17.07.87**

(54) **Dispositif de communication pour entrée d'immeubles.**

(30) Priorité: **25.07.86 FR 8610941**

(43) Date de publication de la demande:
**30.03.88 Bulletin 88/13**

(45) Mention de la délivrance du brevet:
**02.05.91 Bulletin 91/18**

(84) Etats contractants désignés:
**AT BE CH DE ES GB GR IT LI LU NL SE**

(56) Documents cités:
**EP-A- 0 198 411
DE-A- 2 392 188
DE-A- 2 921 485**

(73) Titulaire: **Vallat, Xavier**
**3 et 5, rue du Pré de la Dame**
**F-57530 Silly-sur-Nied(FR)**

Titulaire: **Renaud, Pierre**
**8bis, route de Briey**
**F-57160 Chatel-Saint-Germain(FR)**

(72) Inventeur: **Vallat, Xavier**
**3 et 5, rue du Pré de la Dame**
**F-57530 Silly-sur-Nied(FR)**
Inventeur: **Renaud, Pierre**
**8bis, route de Briey**
**F-57160 Chatel-Saint-Germain(FR)**

(74) Mandataire: **Aubertin, François**
**Cabinet Lepage & Aubertin Innovations et**
**Prestations 4, rue de Haguenau**
**F-67000 Strasbourg(FR)**

**Description**

L'invention concerne un dispositif de communication pour entrée d'immeubles comprenant un support solidaire de la façade extérieure de l'immeuble et pourvu d'un cadre métallique, d'une plaque présentant des moyens de visualisation et d'affichage d'informations temporaires et un élément de commande et de sélection à mémoire, d'un haut-parleur extérieur, d'au moins une sonnette présentant un emplacement pour le nom, au moins un haut-parleur intérieur muni d'un contacteur, de moyens de liaison et de moyens de sélection permettant la conversation entre la personne à l'extérieur de l'immeuble et l'un des occupants de l'immeuble.

On connaît déjà, par exemple du document DE-A-2921485, des dispositifs de communication pour entrées d'immeubles comprenant un support solidaire de la façade extérieure de l'immeuble et accessible aux personnes désirant entrer dans l'immeuble. Ce support comporte un haut-parleur et un certain nombre de sonnettes, ce nombre étant fonction du nombre d'appartements que comprend l'immeuble. La ou les sonnettes présentent un emplacement permettant d'identifier l'occupant correspondant à la sonnette. Ce haut-parleur extérieur est relié par des moyens adéquats à un ou à des haut-parleurs intérieurs munis d'un contacteur permettant à l'occupant de dialoguer avec la personne extérieure. S'il existe une pluralité d'appartements, donc de haut-parleurs, le dispositif de communication comporte également des moyens de sélection pour relier la sonnette actionnée au haut-parleur intérieur correspondant.

Cependant, ces dispositifs connus présentent plusieurs inconvénients. En effet, selon le taux de rotation des occupants, une remise à jour des noms sur les sonnettes est nécessaire. Fréquemment, cette remise à jour s'effectue souvent avec des moyens disparates et toujours inesthétiques tels que cartes de visite découpées, inscriptions manuscrites et autres. Forcément, ces moyens disparates ne présentent aucune uniformité, ce qui augmente encore l'aspect inesthétique du support métallique extérieur. Dans certains immeubles, une certaine normalisation est imposée au moyen de plaquettes gravées dont le coût et la mise en oeuvre impliquent des frais importants.

A cet aspect essentiellement esthétique s'ajoutent l'agression et le vandalisme dont font l'objet ces dispositifs de communication, surtout les éléments situés à l'extérieur et à la portée de toutes sortes d'agression.

Par ailleurs, de nombreux immeubles comportent des bureaux, des locaux professionnels et autres tels que médecins, avocats et analogues et la façade d'entrée de l'immeuble est bordée de panneaux informatiques citant, par exemple, l'activité de l'occupant, les heures d'ouverture etc.... Cette pluralité de panneaux non seulement dépare l'aspect de la façade mais fréquemment la place disponible est insuffisante pour tous les panneaux.

Finalement, la communication entre la personne extérieure et l'occupant basée uniquement sur la parole est parfois difficile en raison de la nuisance sonore qui entoure fréquemment la personne extérieure, notamment lorsque l'immeuble est situé dans une rue à grande circulation.

On connaît également, par la demande interférente EP-0 198 411, un dispositif de communication pour entrée d'immeubles comprenant un support solidaire de la façade extérieure de l'immeuble et pourvu d'un cadre métallique, d'une plaque présentant des moyens de visualisation et d'affichage d'informations temporaires et un élément de commande et de sélection à mémoire, d'un haut-parleur extérieur, d'au moins une sonnette, au moins un haut-parleur intérieur muni d'un contacteur, de moyens de liaison et de moyens de sélection permettant la conversation entre la personne à l'extérieur de l'immeuble et l'un des occupants de l'immeuble.

Par ailleurs, ce dispositif de communication comporte un clavier à touches alphabétiques, un cla vier à touches numériques et un clavier à touches de fonction, ces différents claviers étant accessibles depuis l'extérieur de l'immeuble. Il appartient au visiteur d'appuyer sur la touche du clavier alphabétique correspondant à la première lettre du nom de famille ou du nom commercial de la société avec laquelle il veut entrer en contact, puis d'actionner la touche de visualisation.

Suite à cette manipulation apparaissent sur l'un des écrans le nom de famille ou le nom commercial et sur l'autre écran le numéro de l'appartement et/ou de l'étage.

Toutefois, ce dispositif présente plusieurs inconvénients ssupplémentaires aux inconvénients cités ci-dessus tels que l'agression possible des éléments accessibles depuis l'extérieur. Un de ces inconvénients supplémentaires consiste en la complexité du dispositif. En effet, le visiteur ne connait pas forcément le fonctionnement du dispositif. C'est pourquoi, on prévoit sur le support un emplacement complémentaire pour le mode d'emploi, ce qui entraîne une augmentation dimensionnelle du support. Un autre inconvénient supplémentaire consiste en la présence des différents claviers. Du fait que les inscriptions sur les touches doivent être lisibles, notamment pour les personnes âgées, les claviers sont relativement grands, ce qui provoque également une augmentation de la largeur du dispositif éventuellement incompatible avec la place disponible sur la façade de l'immeuble.

La présente invention a pour but de remédier à ces inconvénients. L'invention, telle qu'elle est caractérisée dans les revendications, résout le problème consistant à créer un dispositif de communciation pour entrée d'immeubles comprenant un support solidaire de la façade extérieure de l'immeuble et pourvu d'un cadre métallique, d'une plaque présentant des moyens de visualisation et d'affichage d'informations temporaires et un élément de commande et de sélection à mémoire , d'un haut-parleur extérieur, d'au moins une sonnette présentant un emplacement pour le nom, au moins un haut-parleur intérieur muni d'un contacteur, de moyens de liaison et de moyens de sélection permettant la conversation entre la personne à l'extérieur de l'immeuble et l'un des occupants de l'immeuble et comportant un corps transparent formé par une plaque de verre pare-balles entièrement lisse et présentant un pourtour supérieur au périmètre d'une ouverture réalisée dans le cadre métallique et recouvrant une plaque de cristaux liquides pourvue, pour chaque occupant, d'un écran de visualisation d'informations permanentes et, pour l'ensemble des occupants, d'un écran de visualisation d'informations temporaires, les différents écrans étant reliés à l'élément de commande à mémoire sollicité par la sonnette actionnée par la personne à l'extérieur de l'immeuble et/ou par le contacteur actionné par l'un des occupants de l'immeuble.

Les avantages obtenus grâce à cette invention consistent essentiellement en ce que le dispositif, sous un volume restreint, comporte simultanément des informations permanentes telles que les noms des occupants combinés avec leur sonnette respective et des informations temporaires telles que des informations d'intérêt général pour les occupants et/ou des messages personnels adaptés aux personnes physiques ou morales résidant dans l'immeuble ayant à communiquer un message à une clientèle et que la fiabilité de ce dipositif est améliorée en raison de sa simplicité d'usage et de composants tout en conservant la possibilité de changer facilement les informations sans démontage onéreux et d'augmenter considérablement la capacité des messages personnels en raison de leur mise en mémoire dans l'élément de commande à mémoire.

Un autre avantage est obtenu par le fait que le corps transparent est une plaque de verre pare-balles entièrement lisse. De ce fait, ledit corps transparent ne présente aucune prise, ni aspérité permettant de contrer l'agression et le vandalisme dont font l'objet les dispositifs connus.

Selon une autr e caractéristique de l'invention, la plaque de cristaux liquides comporte les sonnettes formées par des écrans de visualisation des informations permanentes affichant le nom correspondant de l'occupant et fonctionnant au moyen de cellules photo-électriques ou au thermocontact, le nombre de ces écrans correspondant au nombre des appartments.

Selon une autre caractéristique de l'invention, la plaque de cristaux liquides comporte un écran d'affichage d'informations temporaires à surface importante, l'apparition de l'information étant commandée par la sonnette correspondante.

L'invention est exposée ci-après plus en détail à l'aide de dessins représentant seulement un mode d'exécution.

La figure 1 représente une vue en élévation du dispositif de communication conforme à l'invention.

La figure 2 représente une vue éclatée en perspective des éléments essentiels du dispositif de communication.

La figure 3 représente un schéma de fonctionnement.

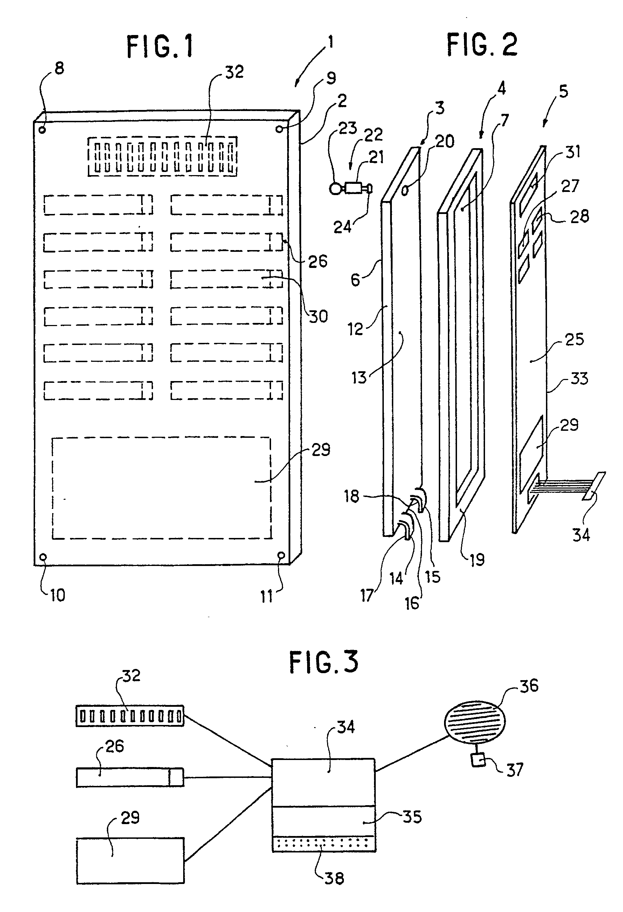

On se réfère aux figures 1 et 2.

La description suivante se rapporte essentiellement à la partie du dispositif de communication fixée à l'entrée d'un immeuble ou à un endroit accessible depuis l'extérieur.

Le dispositif de communication 1 comporte, entre autres, un support 2. Celui-ci décompose en trois éléments principaux, à savoir un corps 3, un cadre métallique 4 et un moyen de visualisation et d'affichage d'informations 5.

Avantageusement, le corps 3 est un corps transparent permettant la lecture des informations. Pour parer aux risques de détérioration, le corps transparent 3 ne présente sur sa face extérieure 6 aucune aspérité, ni ouverture. Ce corps transparent 3 est encastré dans une ouverture 7 réalisée dans le cadre métallique 4. Ce dernier est scellé sur le mur de l'immeuble par des moyens de fixation 8, 9, 10, 11. Cependant, ces moyens de fixation 8 à 11 ne sont pas accessibles depuis l'extérieur car ils sont recouverts par le corps transparent 3. Le périmètre de cette ouverture 7 est inférieur au pourtour 12 du corps transparent 3. Ce dernier présente sur sa face arrière 13 deux pattes 14, 15 situées à proximité du chant inférieur 16 du corps transparent 3. Ces pattes 14, 15 ont une forme de crochet et leurs faces externes 17, 18 viennent s'appliquer contre la face interne 19 du cadre métallique 4. Pour assurer le maintien du corps transparent 3 et annihiler toute possibilité de retirer celui-ci d'une manière intempestive en le séparant du cadre métallique 4, on réalise dans ledit corps transparent 3 un trou 20 dans lequel on peut engager le corps 21 d'une serrure 22 actionnée par une clé de sécurité 23. Cette serrure 22 comporte un pêne 24 qui, lors du verrouillage, vient se placer derrière la face interne 19 du cadre métallique 4 et condamne l'accès aux moyens de visualisation et d'affichage d'informations 5.

Les moyens de visualisation et d'affichage d'informations 5 sont formés par une plaque de cristaux liquides 25. Cette plaque de cristaux liquides 25 comporte, d'une part, des sonnetttes 26 constituées par des écrans de visualisation 27, 28 et au moins un écran d'affichage 29. Selon l'invention, les écrans de visualisation 27, 28 des sonnettes 26 étant destinés à donner des informations permanentes forment les sonnettes et comportent un emplacement 30 sur lequel apparaissent en permanence, soit le nom, soit la raison sociale de l'occupant de l'appartement correspondant à la sonnette. Bien entendu, le nombre des écrans de visualisation correpond au nombre des appartements et/ou locaux de l'immeuble. Du fait que la plaque de cristaux liquides 25 est recouverte par le corps transparent 3, les écrans de visualisation 27, 28 des sonnettes 26 formant sonnettes fonctionnent au moyen de cellules photo-électriques ou par effet de thermocontact.

Conformément à l'invention, la plaque de cristaux liquides 25 comporte au moins un écran d'affichage 29 pour des informations temporaires. A cet effet, la surface de cet écran d'affichage 29 est plus grande que celle des écrans de visualisation 27, 28 des sonnettes 26. En effet, ces derniers ne nécessitent qu'une surface restreinte puisqu'elle est uniquement destinée à l'affichage du nom de l'occupant et du chiffre de l'étage alors que l'écran d'affichage 29 est destiné à recevoir une quantité d'informations de toute nature, soit des messages d'intérêt général pour les occupants tels que convocations à des assemblées de copropriétaires, locataires ou travaux dans l'immeuble, à savoir coupure de courant, coupure d'eau, désinfection et autres, soit des messages personnels adaptés en fonction de l'activité de l'occupant, soit des messages à communiquer à un tiers, notamment à la clientèle.

Par ailleurs, la plaque de cristaux liquides 25 comporte un logement 31 pour la mise en place du haut-parleur extérieur 32. S'il s'avère que la puissance de ce dernier est insuffisante pour une audition correcte des paroles prononcées par l'occupant, on réalise de petits trous, soit à travers le corps transparent 3, soit dans le cadre métallique 4 pour le passage des sons.

Selon un premier mode de réalisation, la plaque de cristaux liquides 25 est légèrement supérieure au périmètre de l'ouverture 7 du cadre métallique 4. Dans ce cas, la plaque de cristaux liquides 25 est fixée sur la face interne 19 du cadre métallique 4 par des moyens de fixation traversant la plaque de cristaux liquides 25 et se vissant dans le cadre métallique 4.

Selon un autre mode de réalisation, la plaque de cristaux liquides 25 comporte un périmètre 33 légèrement inférieur au périmètre de l'ouverture 7 et s'engage à l'intérieur du cadre métallique. A cet effet, ladite plaque de cristaux liquides 25 comporte des ouvertures pour le passage des pattes 14, 15 du corps transparent 3 et pour le passage du pêne 24 de la serrure 22.

On se réfère à la figure 3. Le haut-parleur extérieur 32, chaque sonnette 26 et l'écran d'affichage 29 sont reliés à un élément de commande et de sélection 34 pourvu d'une mémoire 35. De même, chaque haut-parleur intérieur 36, pourvu d'un contacteur 37, est relié audit élément de commande. Cet élément de commande et de sélection 34 est logé dans un coffret verrouillé accessible uniquement à une personne désignée.

Selon un premier mode d'exécution, l'élément de commande et de sélection 34 comporte des touches 38 pour la mise en mémoire des différentes informations accessibles après retrait de la plaque de cristaux liquides 25 libérée après enlèvement de la plaque de verre pare-balles 3 obtenue par déverrouillage de la serrure 22.

Selon un autre mode d'exécution, la mise en mémoire des différentes informations se fait à distance et les touches se trouvent dans un local particulier tel que le bureau du syndic de copropriété et de gestion d'immeubles et donc situées à une certaine distance d'un coffret (non représenté) renfermant l'élément de commande et de sélection à mémoire 34.

En raison de la présence d'une mémoire, le nombre d'informations est pratiquement illimité.

En actionnant une sonnette 26, l'élément de commande et de sélection 34 fait appel à la mémoire 35 pour, d'une part, agir sur le haut-parleur intérieur correspondant 36 et, d'autre part, le cas échéant, rendre visible le message sur l'écran d'affffichage 29.

Par ailleurs, on peut conférer au dispositif selon l'invention des fonctions complémentaires. Ainsi, il y a la possibilité d'inclure soit un clavier pour l'ouverture automatique de la porte par un code confidentiel, le clavier étant constitué à partir de contacts de même nature que les sonnettes, soit un circuit vidéo au travers du corps transparent 3 du support 2, soit une signalisation de détresse personnelle ou collective. A cet effet, on peut utiliser le circuit électrique existant reliant le haut-parleur intérieur 36 au haut-parleur extérieur 32 et prévoir que les informations de détresse seront suréclairées par clignotement avec rappel sonore.

## Revendications

1. Dispositif de communication pour entrée d'immeubles comprenant un support (2) solidaire de la façade extérieure de l'immeuble et pourvu d'un cadre métallique (4), d'un haut-parleur extérieur (32), d'au moins une sonnette (26) présentant un emplacement (30) pour le nom, au moins un haut-parleur intérieur (36) muni d'un contacteur (37), de moyens de liaison et de moyens de sélection permettant la conversation entre la personne à l'extérieur de l'immeuble et l'un des occupants de l'immeuble, d'un corps transparent (3) formé par une plaque (5) de verre pare-balles entièrement lisse et présentant un pourtour supérieur au périmètre d'une ouverture (7) réalisée dans le cadre métallique (4) et recouvrant une plaque de cristaux liquides (5) pourvue, pour chaque occupant, d'un écran de visualisation d'informations permanentes (27, 28) et, pour l'ensemble des occupants, d'un écran de visualisation d'informations temporaires (29), les différents écrans (27, 28, 29) étant reliés à un élément de commande et de sélection à mémoire (34) sollicité par la sonnette actionnée (26).

2. Dispositif de communication selon la revendication 1, caractérisé en ce que le corps transparent (3) comporte, d'une part, sur sa face arrière (13) deux pattes (14, 15) venant s'accrocher derrière la face interne (19) du cadre métallique (4) et, d'autre part, un trou (20) dans lequel on engage le corps (21) d'une serrure (22) actionnée par une clé de sécurité (23) et dont le pêne (24) se place derrière la face interne (29) du cadre métallique (4) interdisant l'accès à la plaque de cristaux liquides (25).

3. Dispositif de communication selon la revendication 1 caractérisé en ce que la plaque de cristaux liquides (25) comporte les sonnettes (26), formées par les écrans de visualisation (27, 28) des informations permanentes affichant le nom correspondant de l'occupant et fonctionnant au moyen de cellules photo-électriques ou au thermocontact, le nombre de ces écrans de visualisation (27, 28) correspondant au nombre des appartements, l'écran d'affichage (29) à surface importante pour les informations temporaires dont l'apparition est commandée par la sonnette correspondante (26) et un logement (31) pour le haut-parleur extérieur (32).

4. Dispositif de communication selon la revendication 1, caractérisé en ce que l'élément de commande et de sélection à mémoire (34) comporte des touches (38), pour la mise en mémoire des différentes informations permanentes et/ou temporaires, accessibles après enlèvement de la plaque de verre pare-balles (3) et de la plaque de cristaux liquides (25).

5. Dispositif de communication selon la revendication 1, caractérisé en ce qu'il comporte des touches (38), pour la mise en mémoire des différentes informations permanentes et/ou temporaires, situées à un certaine distance d'un coffret renfermant l'élément de commande et de sélection à mémoire (34).

## Claims

1. Communication device for the entrance of buildings, comprising a support plate (2) integral with the external front wall of the building and provided with a metal frame (4), an external loudspeaker (32), at least a bell (26) having a location (30) for the name, at least an internal loudspeaker (36) provided with a contactor (37), connection means and selection means allowing the conversation between the person outside the building and one of the occupants of the building, a transparent body (3) formed by a completely smooth plate (5) of bullet-proof glass and having a periphery larger than the perimeter of an opening (7) provided for in the metal frame (4) and recovering a liquid crystal plate (5) provided, for each occupant, with a permanent data display (27, 28) and, for all occupants, with a temporary data display (29), the various displays (27, 28, 29) being connected to a control and selection member with memory (34) activated by the actuated bell (26).

2. Communication device according to claim 1, characterized in that the transparent body (3) comprises, on the one hand, at its rear face (13), two feet (14, 15) which hook in behind the inner face (19) of the metal frame (4) and, on the other hand, an opening (20) into which is engaged the body (21) of a lock (22) actuated by means of a safety-key (23) and the bolt (24) of which is located behind the inner face (29) of the metal frame (4), preventing the access to the liquid crystal plate (25).

3. Communication device according to claim 1, characterized in that the liquid crystal plate (25) comprises the bells (26), formed by the permanent data displays (27, 28) displaying the respective name of the occupant and operating by means of photocells or by thermal contact, the number of these displays (27, 28) corresponding to the number of flats, the large-surface display (29) for the temporary data the appearance of which is controlled by the corresponding bell (26) and a recess (31) for the external loudspeaker (32).

4. Communication device according to claim 1, characterized in that the control and selection member with memory (34) comprises keys (38) for the storing in the memory of the various permanent and/or temporary data, which are accessible after removal of the plate (5) of bullet-proof glass and the liquid crystal plate (25).

5. Communication device according to claim 1, characterized in that it comprises keys (38) for the storing in the memory of the various permanent and/or temporary data, located at a certain distance from a casing containing the control and selection member with memory (34).

**Ansprüche**

1. Gesprächsvorrichtung für den Eingang von Gebäuden, umfassend eine fest mit der Außenfrontwand des Gebäudes verbundene Tragplatte (2), die versehen ist mit einem Metallrahmen (4), einem Außenlautsprecher (32), wenigstens einer Glocke (26), die eine Stelle (30) für den Namen aufweist, wenigstens einem Innenlautsprecher (36), der versehen ist mit einem Kontaktschalter (37), verbindungsmitteln und Wahlmitteln, die das Gespräch zwischen der an der Außenseite des Gebäudes befindlichen Person und einem der Bewohner des Gebäudes erlauben, einem durchsichtigen Körper (3), der von einer völlig glatten Platte (5) aus kugelfestem Glas gebildet ist, die einen Umkreis aufweist, der größer ist als der Perimeter einer im Metallrahmen (4) vorgesehenen Öffnung (7) und eine flüssige Kristallplatte überdeckt, die, für jeden Einwohner, mit einem ständigen Datenanzeigeschirm (27, 28) und, für die sämtlichen Einwohner, mit einem zeitweiligen Datenanzeigeschirm (29) versehen ist, wobei die verschiedenen Schirme (27, 28, 29) mit einem Bedienungs- und Wahlglied mit Speicher (34), der von der betätigten Glocke (26) eingeschaltet wird, verbunden sind.

2. Gesprächsvorrichtung nach Anspruch 1, dadurch gekennzeichnet, daß der durchsichtige Körper (3) einerseits, an der Hinterfläche (13), zwei Füßchen (14, 15), die sich hinter der Innenfläche (19) des Metallrahmens (4) festhaken und, andererseits, eine Öffnung (20) umfaßt, in die der Körper (21) eines mittels eines Sicherheitsschlüßels (23) betätigten Schloßes (22), dessen Riegel (24) sich hinter der Innenfläche (29) des Metallrahmens (4) stellt und den Zugang zur flüßigen Kristallplatte (25) verhindert, eingeführt wird.

3. Gesprächsvorrichtung nach Anspruch 1, dadurch gekennzeichnet, daß die flüßige Kristallplatte (25) die Glocken (26) umfaßt, die von den ständigen Datenanzeigeschirmen, die den entsprechenden Namen des Einwohners anzeigt und deren Betrieb mittels Photozellen oder eines Wärmekontakts erfolgt, wobei die Anzahl der Anzeigeschirme der Anzahl der Wohnungen entspricht, dem großflächigen Anzeigeschirm (29) für die zeitweiligen Daten, deren Erscheinung von der entsprechenden Glocke (26) gesteuert wird, und einer Aussparung (31) für den Außenlautsprecher (32) gebildet sind.

4. Gesprächsvorrichtung nach Anspruch 1, dadurch gekennzeichnet, daß das Bedienungs- und Wahlglied mit Speicher (34) Tasten (38) zum Speichern der verschiedenen ständigen und/oder zeitweiligen Daten umfaßt, die nach Entfernung der Platte (5) aus kugelfreiem Glas und der flüssigen Kristalplatte (25) zugänglich sind.

5. Gesprächsvorrichtung nach Anspruch 1, dadurch gekennzeichnet, daß sie Tasten (38) zum Speichern der verschiedenen ständigen und/ oder zeitweiligen Daten umfaßt, die sich auf einem bestimmten Abstand vom Kasten, der das Bedienungs- und Wahlglied mit Speicher (34) enthält, befinden.

# FIG.1

# FIG.2

# FIG.3